# EUROPÄISCHE PATENTANMELDUNG

(11) **EP 1 068 780 A1**
(43) Veröffentlichungstag der Anmeldung: **17.01.2001**
(21) Anmeldenummer: 00114273.6
(22) Anmeldetag: 04.07.2000
(51) Int. Cl.: A01B 59/06

(54) **Verschwenkbarer Geräteanbau eines Kraftfahrzeugs**

(30) Priorität: 13.07.1999 DE 19932612
(71) Anmelder: DEERE & COMPANY, Moline, Illinois 61265-8098 (US)
(72) Erfinder: Bernhard, G., Prof. Dr.-Ing. habil., 01728 Hänichen (DE); Fedotow, Sergej, 01069 Dresden (DE); Wünsche, Mario, 01454 Radeberg (DE)
(74) Vertreter: Lau-Loskill, Philipp, Dipl.-Phys.

(57) **Zusammenfassung**

Es wird ein Kraftfahrzeug für industrielle und/oder landwirtschaftliche Arbeiten beschrieben, welches eine einen Dreipunkt-Geräteanbau enthaltende Anbauschnittstelle an der Fahrzeugrückseite oder an der Fahrzeugvorderseite enthält.

Um das Einsatzspektrum des Kraftfahrzeugs und insbesondere die Funktionalität der Anbauschnittstelle zu erweitern, wird vorgeschlagen, daß an dem Fahrzeugchassis (14) ein um eine im wesentlichen horizontale Achse (26) vertikal verschwenkbarer Ausleger (16) befestigt ist. An dem freien Endbereich des Auslegers (16) sind die Unterlenker (46) des Dreipunkt-Geräteanbaus (24) angelenkt. An dem Ausleger (16) ist ein ausfahrbarer Oberlenker (44) unmittelbar oder mittelbar angeordnet. An dem freien Ende des Auslegers (16) kann auch ein Träger (22) montiert sein, an dem die Unterlenker (46) angelenkt sind. Des weiteren kann der Ausleger ein am Fahrzeugchassis (14) angelenktes Schwenkteil (15) und einen im Schwenkteil (15) verschiebbar angeordneten Einschub (17) aufweisen, an dem der Träger (22) montiert ist.

## Beschreibung

Die Erfindung betrifft ein Kraftfahrzeug für industrielle und/oder landwirtschaftliche Arbeiten, insbesondere einen Ackerschlepper, mit einer einen Dreipunkt-Geräteanbau enthaltenden Anbauschnittstelle an der Fahrzeugrückseite oder an der Fahrzeugvorderseite.

Insbesondere Ackerschlepper, aber auch andere industrielle oder landwirtschaftlich verwendete Arbeitsfahrzeuge dienen neben der Ausführung von Transportarbeiten vor allem als Arbeitsmaschine, durch die sich beispielsweise Arbeiten auf dem Feld ausführen lassen. Zu diesem Zweck läßt sich an das Arbeitsfahrzeug ein für die durchzuführende Arbeit geeignetes Arbeitsgerät anbauen. Der Traktor ist somit im Gegensatz zu Einzweckmaschinen ein offenes System, das erst durch die Kopplung mit einem Arbeitsgerät zu einer arbeitsfähigen Maschine wird.

Da das Kraftfahrzeug für die Durchführung unterschiedlicher Arbeiten mit unterschiedlichen Arbeitsgeräten koppelbar sein soll, kommt der Anbauschnittstelle zwischen Kraftfahrzeug und Arbeitsgerät eine besondere Bedeutung zu. Unter einer Anbauschnittstelle sind alle Einrichtungen zu verstehen, die erforderlich sind, um Arbeitsgeräte an das Kraftfahrzeug anzukoppeln und gegebenenfalls mit Antriebsenergie zu versorgen.

Eine übliche Anbauschnittstelle, mit der heute die meisten Ackerschlepper und ähnliche landwirtschaftliche Kraftfahrzeuge versehen sind, enthält einen sogenannten Dreipunkt-Geräteanbau, wie er beispielsweise durch ISO 730 oder DIN 9674 definiert ist. Dieser weist im allgemeinen zwei über eine Hubwelle miteinander verbundene Hubarme auf, an denen je ein zugehöriger hydraulischer Kraftheberzylinder angreift. Jeder Hubarm ist über eine Hubstange oder eine Hubspindel mit einem zugehörigen Unterlenker verbunden, der einen unteren Kopplungspunkt trägt. Des weiteren enthält der Dreipunkt-Geräteanbau einen am Schlepperrumpf angelenkten Oberlenker mit einem dritten mittigen, oberen Kopplungspunkt.

Der Dreipunkt-Geräteanbau ermöglicht es, Arbeitsgeräte auf einfache Weise rasch an den Ackerschlepper zu montieren. Hierbei wird der Ackerschlepper an das auf dem Boden abgestellte Arbeitsgerät herangefahren. Die Koppelungspunkte werden an entsprechende Aufnahmen des Anbaugeräts gekoppelt, so daß das Arbeitsfahrzeug und das Arbeitsgerät eine funktionsfähige Prozeßeinheit bilden. Gegebenenfalls wird eine Zapfwelle des Arbeitsfahrzeugs an eine Eingangswelle des Arbeitsgeräts angeschlossen. Des weiteren können zwischen dem Arbeitsfahrzeug und dem Arbeitsgerät elektrische und hydraulische Verbindungen zur Kraft- und Signalübertragung hergestellt werden. Durch Betätigung der Kraftheberzylinder läßt sich das Arbeitsgerät anheben und in seiner Höhenlage innerhalb bestimmter Grenzen einstellen, um das Arbeitsgerät zwischen einer Transportstellung und der gewünschten Arbeitsposition zu bewegen. Das Arbeitsgerät benötigt dabei in vielen Fällen kein eigenes Fahrgestell.

Trotz des vielseitig anwendbaren Dreipunkt-Geräteanbaus ist das Einsatzspektrum für das Kraftfahrzeug noch begrenzt.

Die der Erfindung zugrunde liegende Aufgabe wird darin gesehen, ein gattungsgemäßes Kraftfahrzeug derart auszubilden, daß sein Einsatzspektrum erweitert wird. Insbesondere soll die Funktionalität der Anbauschnittstelle erweitert werden, um neue Einsatzbereiche für das Kraftfahrzeug zu erschließen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Kraftfahrzeug enthält eine Anbauschnittstelle an der Fahrzeugrückseite oder an der Fahrzeugvorderseite mit einem Dreipunkt-Geräteanbau, der vorzugsweise gemäß ISO 730 oder DIN 9674 ausgebildet sein kann. An dem Fahrzeugchassis, beispielsweise am Fahrzeugrumpf, einem Fahrzeugrahmen oder dem Fahrzeugaufbau, ist ein um eine im wesentlichen horizontale Achse verschwenkbarer Ausleger befestigt. Im Bereich des freien Endes des Auslegers sind Unterlenker des Dreipunkt-Geräteanbaus angelenkt. An dem Ausleger ist ein ausfahrbarer Oberlenker unmittelbar oder unter Zwischenschaltung weiterer Bauteile angeordnet.

Durch die erfindungsgemäße in ihrer Höhe einstellbare, verschwenkbare Anbauschnittstelle werden für das Kraftfahrzeug, insbesondere für den Ackerschlepper, neue Einsatzbereiche erschlossen. Sie ermöglicht einerseits die Durchführung aller Arbeiten, die mit einem herkömmlichen Dreipunkt-Geräteanbau erledigt werden können. Andererseits ist eine große Ladehöhe an der Fahrzeugrückseite bzw. an der Fahrzeugvorderseite ständig verfügbar. Das erfindungsgemäße Kraftfahrzeug ermöglicht das Bewegen von Arbeitsgeräten mit erweiterten Freiheitsgraden und erweitertem Hubbereich. Es läßt sich einerseits als konventioneller Schlepper mit konventioneller Anbauschnittstelle und andererseits als funktionsfähiger Lader einsetzen. Ein bevorzugter Anwendungsfall ist darin zu sehen, daß sich nach einem normalen Arbeitsbetrieb (Pflügen) das Arbeitsgerät (Pflug) so weit ausheben läßt, daß seine Ablage auf einem Anhänger oder einer erhöhten Ablage ohne zusätzliche Hilfsmittel möglich ist. Durch das einfache, rasch auszuführende Verladen kann ein rascher Wechsel zwischen räumlich getrennten Arbeitseinsatzorten erfolgen, indem nach einem Arbeitseinsatz das Arbeitsgerät auf einen Anhänger verladen, der Anhänger an das Kraftfahrzeug angehängt und zu einem neuen Einsatzort bei hoher Fahrgeschwindigkeit gefahren wird. Es ist ein Anheben von Geräten bis beispielsweise in Höhe der Kabinenoberkante möglich, so daß die Geräte hoch angehoben und beispielsweise auf Regalen oder auf Anhängern abgelegt werden können, ohne sie zuvor vom Dreipunkt-Geräteanbau zu lösen.

Vorzugsweise ist im Bereich des freien Endes des Auslegers ein Träger befestigt, an dem die Unterlenker und gegebenenfalls andere Anbau- und Anhängevorrichtungen angelenkt bzw. montiert sind. Die Zwischenschaltung eines Trägers ermöglicht eine einfache Anpassung an unterschiedliche Anforderungen, indem unterschiedliche, an den Ausleger montierbare Träger zur Verfügung gestellt werden. Bei Anpassungen wird lediglich der Träger ausgewechselt, der Ausleger kann beibehalten werden.

Gemäß einer weiteren bevorzugten Ausgestaltung der Erfindung ist eine Verriegelungsvorrichtung vorgesehen, durch die der Ausleger, insbesondere dessen freies Ende, und/oder der Träger gegenüber dem Fahrzeugchassis wahlweise fixierbar ist, wenn sich der Ausleger beispielsweise in einer abgesenkten Arbeitsstellung befindet. Bei Verriegelung werden die von dem Dreipunkt-Geräteanbau übertragenen Kräfte unmittelbar, das heißt ohne Zwischenschaltung des Auslegers, in die Hinterachse oder in das Fahrzeugchassis eingeleitet. Damit werden insbesondere bei Zug- und Transportarbeiten die Zugspannungen unmittelbar an das Fahrzeugchassis übertragen, so daß der Ausleger bei diesen Betriebsarten entlastet wird und daher auf relativ geringe Belastungen ausgelegt werden kann.

Gemäß einer zweckmäßigen Weiterbildung der Erfindung ist an dem freien Ende des Auslegers oder an dem Träger wenigstens ein durch Kraftheberzylinder vertikal verschwenkbarer Hubarm angelenkt, der über eine Hubstrebe, Hubstange oder Hubzylinder mit einem der Unterlenker verbunden ist. Hierdurch kann die übliche Funktionalität der Unterlenker auch bei der erfindungsgemäßen Anbauschnittstelle in vollem Maße gewährleistet werden.

Die Anbauschnittstelle enthält neben dem Dreipunkt-Geräteanbau vorzugsweise weitere im Bereich des freien Endes des Auslegers oder am Träger befestigbare Anbauvorrichtungen und/oder Anhängevorrichtungen. Es lassen sich so die Funktionen der heute üblichen Einpunkt-Anhängevorrichtungen, wie Zughaken, starres Zugpendel, Anhängekupplung und dergleichen nachbilden.

Bei solchen Ausbildungen können Zugösen eines anzuhängenden Gerätes vom Boden aufgenommen und hydraulisch in Betriebsposition gebracht werden. An dem Ausleger oder dem Träger können sich auch elektrische und/oder hydraulische Anschlüsse befinden, die der Kraft- oder Signalübertragung dienen.

Eine besonders bevorzugte Ausbildung der Erfindung sieht vor, daß der Ausleger einen in Längsrichtung des Auslegers verschiebbaren Schubarm führt, an dem der Oberlenker angelenkt ist. Ein an dem freien Ende des Schubarms angelenkter Oberlenker läßt sich somit mit dem im wesentlichen parallel zur jeweiligen Auslegerausrichtung verschiebbaren Schubarm ein- und ausfahren. Durch eine teleskopartige Führung des Schubarms im Ausleger läßt sich eine günstige, stabile Ausbildung realisieren, die als eine im wesentlichen 2-fach teleskopierbare Heckschnittstelle angesehen werden kann.

Die Schwenkbewegung des Auslegers und die Ausfahrbewegung des Schubarms werden gemäß bevorzugter Weiterbildungen der Erfindung durch Druckmittelkolben-Zylindereinheiten vorgenommen. Diese Zylindereinheiten sind zwischen dem Fahrzeugchassis und dem Ausleger, insbesondere dem Schwenkteil, bzw. zwischen dem Ausleger und dem Schubarm angeordnet. Es handelt sich zweckmäßigerweise um doppelwirkende Hydraulikzylinder. Diese können durch das Hydrauliksystem des Kraftfahrzeugs mit Hydraulikdruckflüssigkeit versorgt werden. Vorzugsweise greifen zwei wirkungsmäßig parallel angeordnete Schwenkzylinder einerseits an dem Fahrzeugchassis und andererseits an dem Schwenkteil an, um das Schwenkteil zu verschwenken und damit das Anbaugerät in vertikaler Richtung zu bewegen.

Um den Kopplungspunkt des Oberlenkers relativ zum Ausleger ein- und ausfahren zu können, sieht eine bevorzugte Ausgestaltung der Erfindung vor, daß alternativ oder ergänzend zu einem verschiebbaren Schubarms in den Oberlenker ein Oberlenkerzylinder integriert ist, durch den sich seine Länge einstellen läßt. Beispielsweise kann hierbei das Waagerechthalten des Anbaugeräts in einem unteren Hubbereich durch eine entsprechende Ansteuerung des Oberlenkerzylinders und in einem oberen Hubbereich durch eine entsprechende Ansteuerung eines Schubarmzylinders erfolgen.

Vorzugsweise ist der Ausleger hinsichtlich der Quererstreckung des Fahrzeugs mittig, hinter der Fahrerplattform, insbesondere hinter der Kabine, und vor der Hinterachse angelenkt. Das Kraftfahrzeug kann dabei in vorteilhafter Weise als Mittel- oder Frontsitzschlepper mit vier in etwa gleich großen Rädern ausgebildet sein.

Um die Anbauschnittstelle besonders hoch anheben zu können, enthält gemäß einer bevorzugten Ausgestaltung der Erfindung der Ausleger im wesentlichen ein am Fahrzeugchassis schwenkbar angelenktes Schwenkteil und mindestens einen vom Schwenkteil geführten ausfahrbaren Einschub, der der Längenausdehnung des Auslegers dient. Im Bereich des freien Endes des Einschubs ist vorzugsweise ein Träger befestigt, der einen Dreipunkt-Geräteanbau und gegebenenfalls andere Anbau- und Anhängevorrichtungen und Anschlüsse trägt.

Gemäß einer besonders einfachen Weiterbildung der Erfindung ist die Verbindung zwischen Schwenkteil und Einschub teleskopartig ausgebildet, so daß der innere Einschub in dem äußeren Schwenkteil geführt ist. Schwenkteil und Einschub können ineinander steckbare Rechteckprofile aufweisen, die ein vergleichsweise hohes Widerstandsmoment bieten und eine einfache Konstruktion der Gleitführungen und der Stützpunkte für Hubeinrichtungen ermöglichen. Für besondere Anwendungsfälle kann auch die Verwendung eines Auslegers mit drei konzentrisch ineinander schiebbaren Schüssen vorteilhaft sein.

Ein weiterer Vorteil eines teleskopierbaren Auslegers liegt darin, daß das Koppeln von Anbaugeräten und beispielsweise auch das Graben mit der Erdschaufel durch im wesentlichen horizontale Aus- und Einfahrbewegungen des Teleskoparms realisiert werden können, ohne daß der Traktor bewegt werden muß.

Insbesondere kann zum Aus- und Einfahren der Schüsse wenigstens ein als Druckmittelkolben-Zylindereinheit ausgebildeter Ausschubzylinder zwischen dem Schwenkteil und einem ausfahrbaren Einschub bzw. jeweils zwischen den Schüssen des Auslegers vorgesehen sein.

Es hat sich auch als vorteilhaft herausgestellt, einen an den Dreipunkt-Geräteanbau befestigbaren Adapter vorzusehen, der der Aufnahme von speziellen Geräten dient, deren Anbauschnittstelle beispielsweise nicht durch die oben genannte Norm für einen Dreipunkt-Geräteanbau definiert ist. Durch diese Kombination des Dreipunkt-Geräteanbaus mit einem Adapter kann das erfindungsgemäße Fahrzeug beispielsweise als ein konventioneller Frontlader eingesetzt werden. Diese Ausbildung ermöglicht die Durchführung aller Arbeiten, bei der bisher Frontladeranbauten erforderlich waren, wobei die Frontladerwerkzeuge (Erdschaufel, Staplergabel, usw.) sich mittels Spezialadapter an den Dreipunkt-Geräteanbau befestigen lassen.

Bei einer Reihe von Arbeiten soll das Arbeitsgerät eine gewünschte Ausrichtung zum Boden beibehalten, auch wenn der Ausleger vertikal verschwenkt wird. Hierfür ist es von besonderem Vorteil, wenn das Schwenksystem so ausgebildet ist, daß die Kopplungsebene unabhängig von der Neigung des Auslegers senkrecht oder in einer anderen gewünschten Ausrichtung gehalten wird. Eine bevorzugte Weiterbildung der Erfindung sieht hierfür eine Niveausteuereinrichtung vor, die die Schwenzylinder, Schubarmzylinder, Oberlenkerzylinder, Kraftheberzylinder und/oder Ausschubzylinder derart ansteuert, daß das Gerät unabhängig von der Schwenklage des Auslegers in einer gewünschten Ausrichtung relativ zum Boden gehalten wird. Zur Ermittlung eines Istwertsignals für die Niveausteuerung kann die Ausrichtung der gewünschten Lage des Geräts durch einen geeigneten Sensor überwacht werden.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Seitenansicht des hinteren Bereichs eines erfindungsgemäßen Kraftfahrzeugs mit in ihrer Höhe verstellbarer Heckschnittstelle in abgesenkter Arbeitsposition,
- Fig. 2: eine der Fig. 1 entsprechende Seitenansicht, in der die Heckschnittstelle ihre höchste Position einnimmt,
- Fig. 3: die schematische Seitenansicht des hinteren Bereichs eines weitere erfindungsgemäßen Kraftfahrzeugs mit in ihrer Höhe verstellbarer Heckschnittstelle in abgesenkter Arbeitsposition,
- Fig. 4: eine der Fig. 3 entsprechende Seitenansicht, in der die Heckschnittstelle ihre höchste Position einnimmt,
- Fig. 5: die schematische Seitenansicht des hinteren Bereichs eines erfindungsgemäßen Kraftfahrzeugs mit in ihrer Höhe verstellbarer Heckschnittstelle und mit einer Arretiervorrichtung für den Dreipunktanbau,
- Fig. 6: die schematische Seitenansicht des hinteren Bereichs eines erfindungsgemäßen Kraftfahrzeugs mit in ihrer Höhe verstellbarer Heckschnittstelle und mit einer am Fahrzeugrumpf montierten Anhängevorrichtung,
- Fig. 7: die Anhängevorrichtung der Fig. 6 von hinten gesehen,
- Fig. 8: die schematische Seitenansicht des hinteren Bereichs eines erfindungsgemäßen Kraftfahrzeugs mit in ihrer Höhe verstellbarer Heckschnittstelle und mit einer am Dreipunktanbauträger montierten Anhängevorrichtung und
- Fig. 9: die Anhängevorrichtung der Fig. 8 von hinten gesehen.

Bei dem erfindungsgemäßen Kraftfahrzeug, von dem in den Figuren jeweils lediglich der hintere Bereich dargestellt ist, handelt es sich beispielsweise um einen üblichen Mittelsitzschlepper, der nach Art eines bekannten Fast- oder MBtrac ausgebildet ist und der eine erfindungsgemäße in ihrer Höhe verstellbare Heckschnittstelle aufweist.

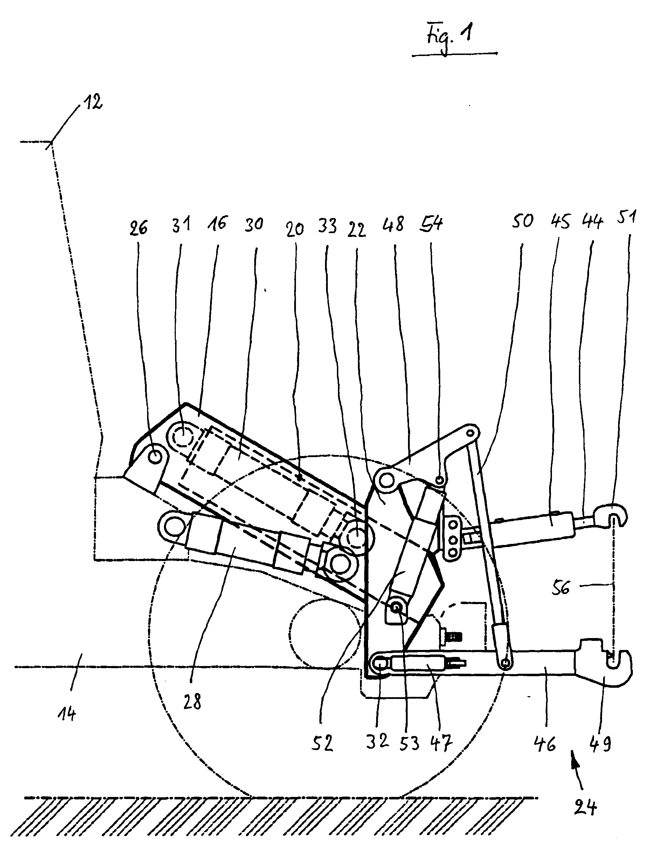

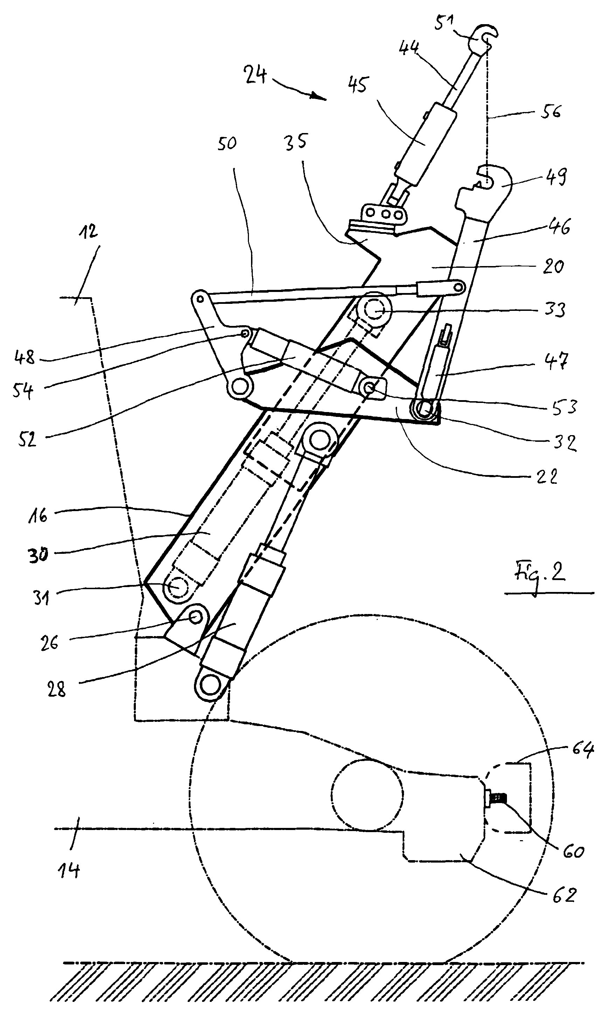

Gemäß Fig. 1 und 2 ist hinter der Fahrzeugkabine 12 und mittig bezüglich der Quererstreckung des Fahrzeugs über eine chassisfeste Anlenkstelle 26 ein Ausleger 16 derart am Fahrzeug angelenkt, daß er sich in vertikaler Richtung verschwenken läßt. Das Verschwenken erfolgt durch zwei beidseits des Auslegers 16 angeordnete Schwenkzylinder 28, die jeweils einenends am Fahrzeugchassis 14 und anderenends an der Mantelfläche des Auslegers 16 angreifen.

Am freien Ende des Auslegers 16 ist ein Träger 22 fest montiert. An dem Träger 22 sind über Anlenkstellen 32 zwei seitliche, nach hinten ausgerichtete Unterlenkern 46 auf übliche Weise verschwenkbar angelenkt. Die Unterlenker 46 lassen sich durch zugehörige, an dem Träger 22 angelenkte Hubarme 48 und Hubstreben 50 anheben und absenken. Sie tragen an ihren freien Enden je einen Kopplungspunkt 49.

Die Betätigung der Hubarme 48 erfolgt auf übliche Weise durch Kraftheberzylinder 52, deren jeweils eines Ende 53 an dem Träger 22 und deren jeweils anderes Ende an einer Anlenkstelle 54 des zugehörigen Hubarms 48 gelenkig angreift. Die Querbewegung der Unterlenker 46 läßt sich durch übliche Stabilisierungslenker 47 begrenzen.

Innerhalb des Auslegers 16 ist ein als Einschub ausgebildeter Schubarm 20 verschiebbar angeordnet, der sich durch einen Schubarmzylinder 30 innerhalb des Auslegers 16 in axialer Richtung ein- und ausfahren läßt. Zu diesem Zweck ist ein Ende 31 des Schubarmzylinders 30 an dem Ausleger 16 und sein anderes Ende 33 an dem Schubarm 20 befestigt. Der Schubarmzylinder 30 läßt sich raumsparend innerhalb des Auslegers 16 und des Schubarms 20 anordnen.

Das aus dem Ausleger 16 herausragende freie Ende des Schubarms 20 trägt einen in Fig. 2 erkennbaren nach oben vorstehenden Lagerbock 35, an dem ein Oberlenker 44 angelenkt ist. In den Oberlenker 44 ist ein hydraulisch betätigbarer Oberlenkerzylinder 45 integriert, durch den sich die Oberlenkerlänge einstellen läßt. Am freien Ende des Oberlenkers 44 ist ein Kopplungspunkt 51 befestigt.

Durch Betätigung des Schubarmzylinders 30 läßt sich der Schuharm 20 und mit ihm der Oberlenker 44 relativ zum Ausleger 16 ein- bzw. ausfahren. Eine Lageänderung des Koppelpunktes 51 des Oberlenkers 44 läßt sich somit sowohl durch Betätigung des Schubarmzylinders 30 als auch des Oberlenkerzylinders 45 vornehmen.

Die Kopplungspunkte 49 der Unterlenker 46 und der Kopplungspunkt 51 des Oberlenkers 44 bilden eine als Dreipunkt-Geräteanbau 24 ausgebildete Anbauschnittstelle, die für die Aufnahme von nicht näher dargestellten Anbaugeräten oder Adaptern, die der Befestigung von Spezialgeräten dienen, geeignet ist. Die Kopplungspunkte 49 der Unterlenker 46 können auch durch einen in der Kopplungsebene 56 liegenden Gerätemast mit dem Kopplungspunkt 51 Oberlenkers 44 verbunden sein. Weitere Anbauvorrichtungen können auch unmittelbar am Fahrzeugchassis 14 montiert sein.

Aus einem Zapfwellengetriebegehäuse 62 ragt eine Zapfwelle 60 herausragt. Das Zapfwellengetriebegehäuse 62 ist an einem nicht näher dargestellten Getriebegehäuse des Fahrzeugs angeflanscht. Die Zapfwelle 60 ist durch ein übliches Zapfwellenschutzschild 64 abgedeckt.

Die beschriebene Anbauschnittstelle läßt sich in zwei Betriebsmodi, dem Arbeits- oder Zugmodus und dem Hubmodus, betreiben:

Für den Arbeitsmodus zeigt Fig. 1 den Ausleger 16 in abgesenkter und verriegelter Stellung. Diese Stellung ist die Transportstellung sowie die Arbeitsstellung für alle Arbeiten mit Dreipunktanbau 24. Durch eine Verriegelung, die später beschrieben wird, ist der Träger 22 mit dem Fahrzeugchassis 14 starr verbunden und verriegelt. Alle Lasten werden von dem Träger 22 aus direkt über die Verriegelung in das Fahrzeugchassis 14 eingeleitet, so daß der Ausleger 16 entlastet ist. In dieser Stellung lassen sich eine Zapfwelle 60 des Arbeitsfahrzeugs an eine Eingangswelle des Arbeitsgeräts anschließen sowie nicht näher dargestellte elektrische und/oder hydraulische Verbindungen zur Kraft- und Signalübertragung zwischen Arbeitsfahrzeug und Arbeitsgerät herstellen. Der Arbeitsmodus wird nach dem Ankoppeln des Arbeitsgerätes durch Betätigung der Verriegelung aktiviert. Der Arbeitsmodus entspricht dem eines herkömmlichen Dreipunktanbaus.

Im Hubmodus ist der Ausleger 16 unverriegelt und läßt sich durch die Schwenkzylinder 28 in vertikaler Richtung verschwenken. Fig. 2 zeigt den Ausleger 16 in einer nach oben geschwenkten Stellung. Im Hubmodus lassen sich Hub- und Ladearbeiten durchführen, und es können hoch abgelegte Arbeitsgräte aufgenommen und abgesetzt werden. Mit diesem Modus lassen sich z. B. Anbaugeräte auf Anhängern aufladen und abladen oder in Regale einlagern.

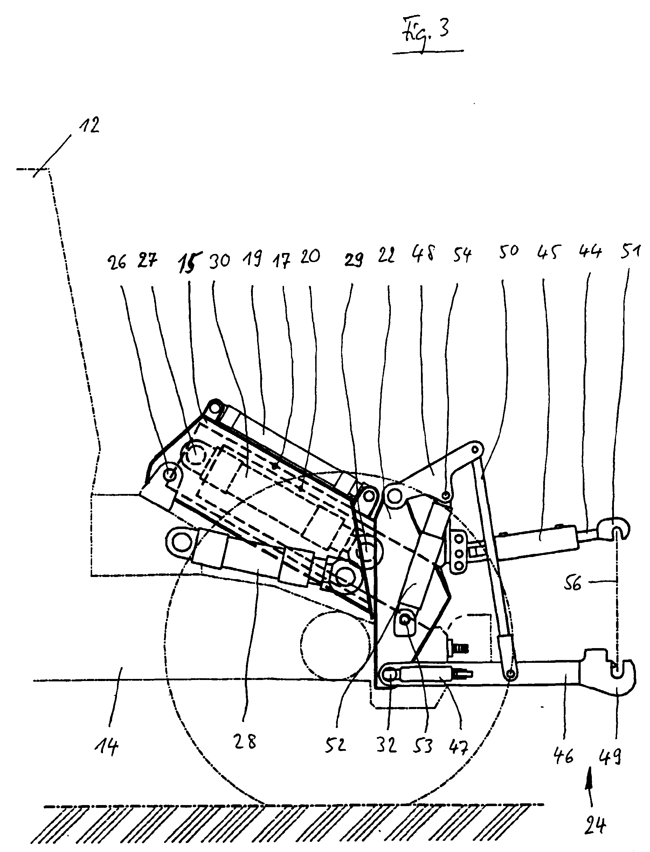

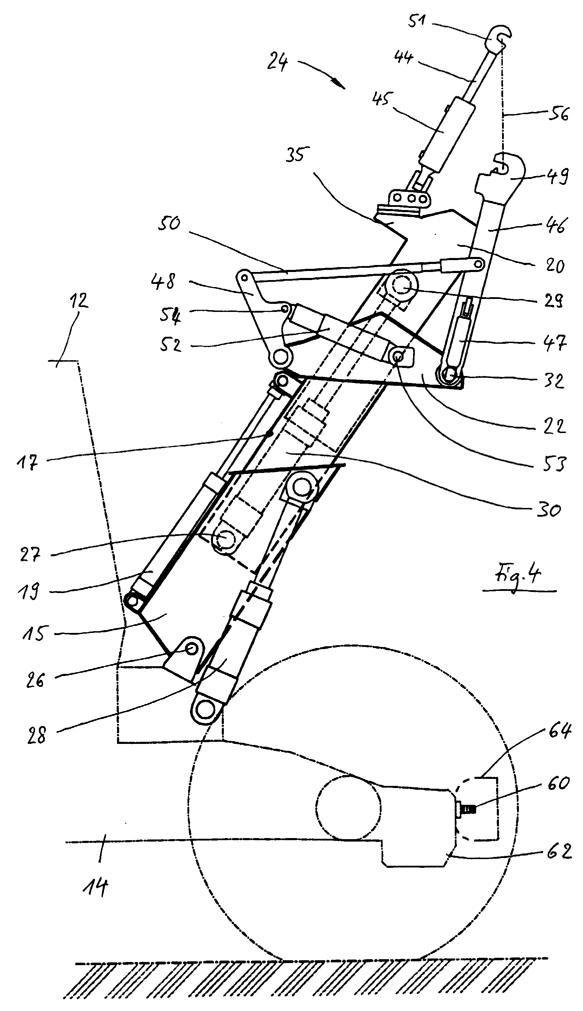

Die in den Figuren 3 und 4 dargestellte alternative Vorrichtung unterscheidet sich von der in den Fig. 1 und 2 dargestellten Vorrichtung im wesentlichen lediglich durch die Ausbildung des Auslegers 16, so daß im folgenden dieser näher beschrieben wird. Gleiche oder sich entsprechende Bauteile wurden in den Fig. 1 bis 4 mit denselben Bezugszeichen belegt.

Gemäß den Figuren 3 und 4 besteht der Ausleger aus einem Schwenkteil 15 und einem ausfahrbaren Einschub 17, der teleskopartig in dem Schwenkteil 15 geführt ist. Das Schwenkteil 15 läßt sich, wie der anhand der Figuren 1 und 2 beschriebene Ausleger 16, durch Schwenkzylinder 28 in vertikaler Richtung verschwenken. Der Einschub 17 ist innerhalb des Schwenkteils 15 durch einen oberhalb des Schwenkteils 15 angeordneten Ausschubzylinder 19 verschiebbar, der einenends am Schwenkteil 15 und anderenends am Einschub 17 angreift. An dem freien, aus dem Schwenkteil 15 herausragenden Ende des Einschubs 17 ist der bereits anhand Fig. 1 und 2 beschriebene Träger 22 befestigt.

Innerhalb des Einschubs 17 ist der bereits anhand Fig. 1 und 2 beschriebene Schubarm 20 verschiebbar angeordnet, der sich durch den Schubarmzylinder 30 innerhalb des Einschubs 17 in axialer Richtung ein- und ausfahren läßt. Ein Ende 27 des Schubarmzylinders 30 ist an dem Einschub 17 und sein anderes Ende 29 ist an dem Schubarm 20 befestigt. Auch hier ist der Schubarmzylinder 30 raumsparend innerhalb des Einschubs 17 und des Schubarms 20 anordnen.

Bei dem in den Figuren 1 und 2 gezeigten Ausführungsbeispiel ist die Anbauschnittstelle 24 nicht teleskopierbar. Hier sind die traktorseitigen Unterlenkeranlenkpunkte 32 nicht ausfahrbar, sondern lassen sich durch die Kraftheberzylinder 52 nur vertikal verschwenken. Die Ausrichtung der Kopplungsebene 56 erfolgt durch Ein- und Ausfahren des Oberlenkers 44 mittels des Schubarmzylinders 30 und/oder des Oberlenkerzylinders 45. Im Unterschied hierzu handelt es sich bei dem in den Figuren 3 und 4 gezeigten Ausführungsbeispiel um eine teleskopierbare Anbauschnittstelle 24, bei der sich die Unterlenker 46 und der Oberlenker 44 gemeinsam ausfahren lassen, indem der Einschub 17 mittels des Ausschubzylinders 19 verschoben wird. Dies ermöglicht eine horizontale Bewegung der Anbauschnittstelle 24 und vergrößert deren Hubbereich. Auch bei der Lösung gemäß Fig. 3 und 4 läßt sich die Kopplungsebene 56 durch Ein- und Ausfahren des Oberlenkers 44 mittels des Schubarmzylinders 30 und/oder des Oberlenkerzylinders 45 ausrichten.

Zusätzlich zu einem Zugmodus und einem Hubmodus, wie sie bereits anhand der Fig. 1 und 2 beschrieben wurden, ermöglicht die Ausbildung gemäß Fig. 3 und 4 eine weitere in den Figuren nicht näher dargestellte Betriebsweise, in der der Ausleger 16 wie beim Hubmodus nicht verriegelt ist. Bei abgesenktem Ausleger 16 (Schwenkteil 15) läßt sich der Einschub 17 aus- und einfahren. Die abgesenkte Stellung ist daher geeignet, um die Anbauschnittstelle 24 an Geräte anzunähern und diese aufzunehmen, ohne daß das Fahrzeug bewegt werden muß. Beispielsweise kann in dieser Stellung die Zugöse eines Geräts oder Anhängers vom Boden aufgenommen werden. Damit lassen sich die Funktionen "Anhängekupplung" und "Pick-Up Hitch" nachbilden. Je nach Ausbildung des Auslegers können auch die Funktionen "starres Zugpendel" (durch teilweises Ausschieben) und "höhenverstellbare Anhängekupplung" (durch Anheben/Absenken) nachgebildet werden. Befindet sich der Schwenkarm 15 in seiner unteren Position, so können bei ausgefahrenem Einschub 17 die Koppelpunkte 49 der Unterlenker 46 eine Lage einnehmen, die tiefer ist als die Bodenoberfläche. Daher eignet sich die in den Figuren 3 und 4 dargestellte Ausbildung auch für das Graben mit Erdschaufeln und dergleichen, ohne daß das Fahrzeug bewegt wird.

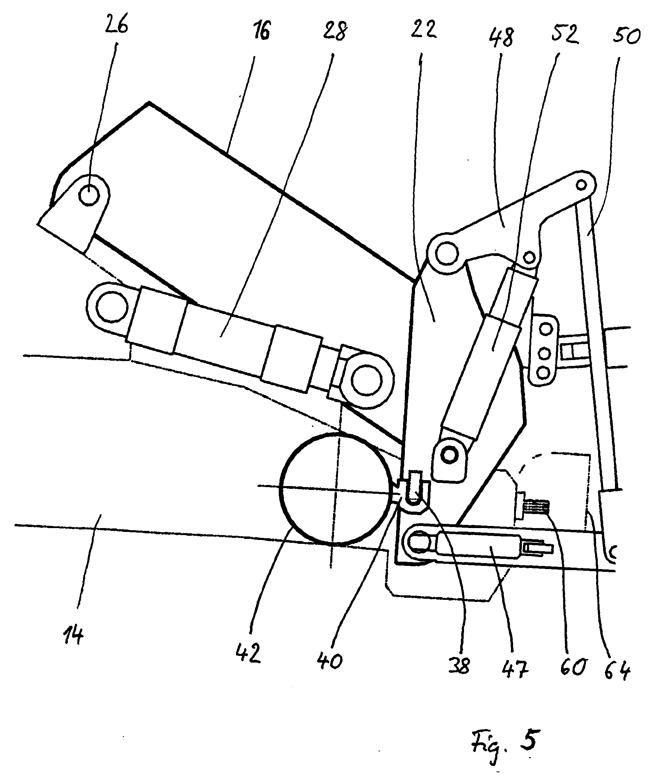

Wie bereits erwähnt wurde, läßt sich der Träger 22 gegenüber dem Fahrzeugchassis 14 verriegeln, was anhand der Fig. 5 näher erläutert wird. Die dargestellte Verriegelung eignet sich für die beiden in den Figuren 1 bis 4 dargestellten Ausführungsvarianten. Dem Zweck der Verriegelung können beispielsweise zwei nach oben offene Fanghaken 40 dienen, die seitlich versetzt zur Fahrzeuglängsachse je an einem der beiden Achstrichter 42 starr befestigt sind. Bei gefederter Achse empfiehlt es sich jedoch, die Fanghaken 40 an dem Fahrzeugchassis 14 zu befestigen.

An dem Träger 22 sind zwei sich quer zur Fahrzeuglängsrichtung erstreckenden Vorsprünge 38 angebracht. An die Vorsprünge 38 sind nach oben offene, schlitzartige Ausnehmungen der Fanghaken 40 angepaßt. Die Vorsprünge 38 können von den Ausnehmungen aufgenommen werden. Sie lassen sich innerhalb der Ausnehmungen der Fanghaken 40 verriegeln. Die Art der Verriegelung wurde nicht näher dargestellt. Es eignen sich beispielsweise Verriegelungsmechanismen in der Art, wie sie bei Schnellkupplern von Unterlenkern üblich sind. Die Verriegelung zwischen Träger 22 und Fahrzeugchassis 14 kann alternativ auch durch Verwendung eines Schlosses oder durch die Ausbildung korrespondierender Bohrungen und Absteckbolzen erfolgen.

Durch die Verriegelung zwischen Träger 22 und Fahrzeugchassis 14 kann sichergestellt werden, daß bei Transportfahrten oder bei Arbeiten mit einem Arbeitsgerät der Träger 22, und mit ihm die Anbauschnittstelle, gegenüber dem Fahrzeugchassis 14 fixiert ist und sich nicht relativ zu diesem bewegt. Dies ist besonders bei Zapfwellenarbeiten vorteilhaft.

Bei Verriegelung werden die von dem Träger 22 übertragenen Kräfte unmittelbar, das heißt ohne Zwischenschaltung des Auslegers 16 (bzw. des Schwenkteils 15 und des Einschubs 17), in die Hinterachse oder in das Fahrzeugchassis 14 eingeleitet. Damit werden insbesondere bei Zug- und Transportarbeiten die Zugspannungen unmittelbar an das Fahrzeugchassis übertragen, so daß der Ausleger 16 (bzw. das Schwenkteil 15 und der Einschub 17) bei diesen Betriebsarten entlastet wird und daher auf relativ geringe Belastungen ausgelegt werden kann.

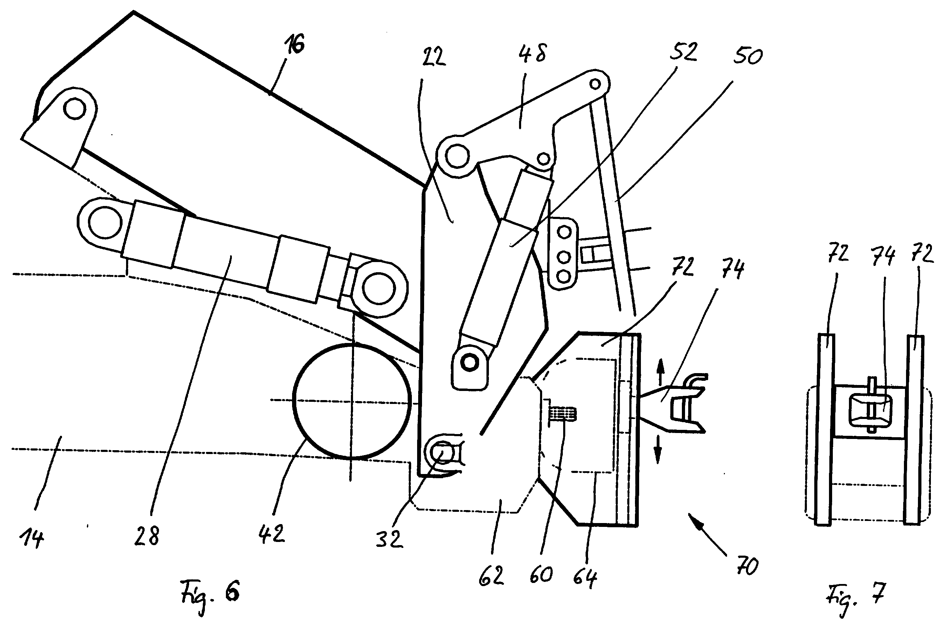

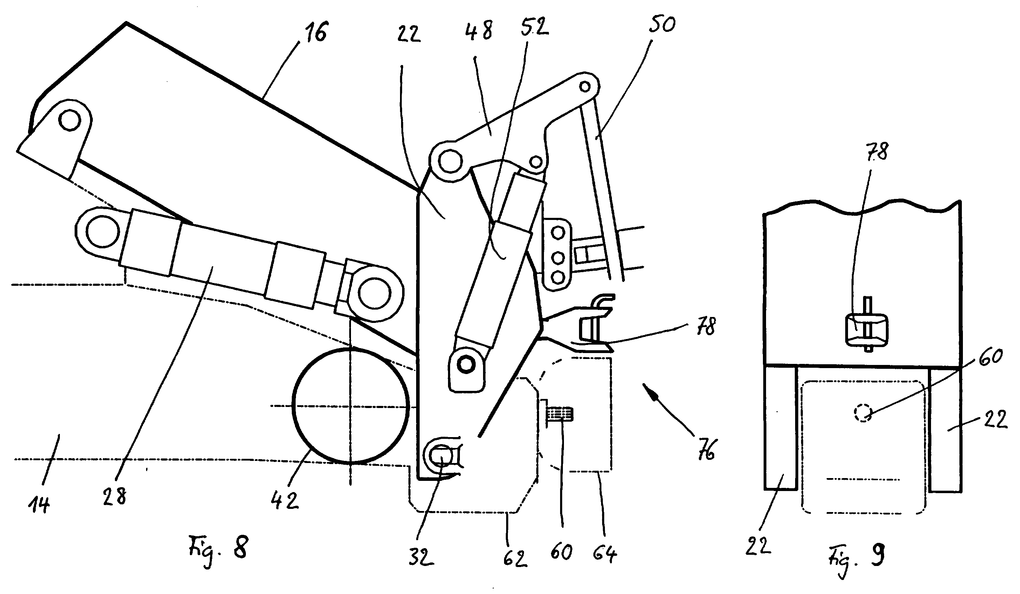

Aus den Figuren 6 und 7 geht eine Anhängevorrichtung 70 hervor, die an dem Zapfwellengetriebegehäuse 62 befestigt ist. Es handelt sich um eine konventionelle höhenverstellbare Anhängevorrichtung 70 mit zwei seitlichen Führungsschienen 72, die eine in der Höhe verschiebbare und in verschiedenen Höhenlagen arretierbare Anhängekupplung 74 führen. Die Befestigung der Anhängevorrichtung 70 am stationären Zapfwellengetriebegehäuse 62 hat den Vorteil, daß die Konstruktion der in ihrer Höhe verstellbaren Heckschnittstelle nicht durch das Anhängen von Geräten belastet wird.

Aus den Figuren 8 und 9 geht eine alternative Ausgestaltung für eine Anhängevorrichtung 76 hervor. Hier ist die Anhängekupplung 78 am Träger 22 befestigt. Diese Ausbildung ist konstruktiv einfacher als die in den Figuren 6 und 7 dargestellte Ausbildung, da die Führungsschienen 72 entfallen können. Die Höhenverstellung erfolgt hier durch Höhenverstellung des Auslegers 16.

Die Schwenkzylinder 28, der Ausschubzylinder 19 und der Schubarmzylinder 30 können als doppelwirkende Hydraulikzylinder ausgebildet sein. Die Hydraulikversorgung erfolgt über das bordeigene Fahrzeughydrauliksystem. Die Bedienung der Hydraulikzylinder 28, 19, 30 erfolgt durch in der Fahrzeugkabine 12 angeordnete Stellorgane, über die sich Hydraulikventile betätigen lassen, um die Hydraulikölströme entsprechend einzustellen. Die Kraftheberzylinder 52 werden auf übliche Weise betätigt bzw. gesteuert. Eine an sich bekannte, nicht näher dargestellte Niveauregeleinrichtung dient der Ansteuerung des Schwenkzylinders 28, des Ausschubzylinders 19, des Schubarmzylinders 30 und gegebenenfalls des Oberlenkerzylinders 45, um die Kopplungsebene 56 in der gewünschten Arbeitsstellung zu halten, während die Anbauschnittstelle angehoben oder abgesenkt wird.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kraftfahrzeug für industrielle und/oder landwirtschaftliche Arbeiten, insbesondere Ackerschlepper, mit einer einen Dreipunkt-Geräteanbau enthaltenden Anbauschnittstelle an der Fahrzeugrückseite oder an der Fahrzeugvorderseite, dadurch gekennzeichnet, daß an dem Fahrzeugchassis (14) ein um eine im wesentlichen horizontale Achse (26) verschwenkbarer Ausleger (16) befestigt ist, an dessen freiem Endbereich die Unterlenker (46) des Dreipunkt-Geräteanbaus angelenkt sind, und daß an dem Ausleger (16) ein ausfahrbarer Oberlenker (44) unmittelbar oder mittelbar angeordnet ist.

2. Kraftfahrzeug nach Anspruch 1, dadurch gekennzeichnet, daß im Bereich des freien Endes des Auslegers (16) ein Träger (22) befestigt ist, an dem die Unterlenker (46) angelenkt sind.

3. Kraftfahrzeug nach Anspruch 1 oder 2, dadurch gekennzeichnet, daß eine Verriegelungsvorrichtung (38, 40) vorgesehen ist, durch die der Ausleger (16) und/oder der Träger (22) gegenüber dem Fahrzeugchassis (14) fixierbar ist, wenn sich der Ausleger (16) insbesondere in einer Arbeitsstellung befindet.

4. Kraftfahrzeug nach einem der Ansprüche 1 bis 3, dadurch gekennzeichnet, daß im Bereich des freien Endes des Auslegers (16) oder an dem Träger (22) wenigstens ein durch Kraftheberzylinder (52) vertikal verschwenkbarer Hubarm (48) angelenkt ist, der über eine Hubstrebe (50) mit einem der Unterlenker (46) verbunden ist.

5. Kraftfahrzeug nach einem der Ansprüche 1 bis 4, dadurch gekennzeichnet, daß im Bereich des freien Endes des Auslegers (16) oder an dem Träger (22) weitere Anbauvorrichtungen und/oder Anhängevorrichtungen und/oder elektrische und hydraulische Anschlüsse befestigbar sind.

6. Kraftfahrzeug nach einem der Ansprüche 1 bis 5, dadurch gekennzeichnet, daß der Ausleger (16) einen in Längsrichtung des Auslegers (16) verschiebbaren Schubarm (20) führt, an dem der Oberlenker (44) angelenkt ist.

7. Kraftfahrzeug nach Anspruch 6, dadurch gekennzeichnet, daß der Schubarm (20) teleskopartig in dem Ausleger (16) geführt ist und daß im Bereich des freien Endes des Schubarms (20) der Oberlenker (44) angelenkt ist.

8. Kraftfahrzeug nach Anspruch 6 oder 7, dadurch gekennzeichnet, daß der Schubarm (20) durch wenigstens einen als Druckmittelkolben-Zylindereinheit ausgebildeten Schubarmzylinder (30) in Längsrichtung verschiebbar ist.

9. Kraftfahrzeug nach einem der Ansprüche 1 bis 8, dadurch gekennzeichnet, daß der Oberlenker (44) einen Oberlenkerzylinder (45) enthält, durch den seine Länge einstellbar ist.

10. Kraftfahrzeug nach einem der Ansprüche 1 bis 9, dadurch gekennzeichnet, daß der Ausleger (16) mittig, hinter der Bedienerplattform und vor der Hinterachse des Kraftfahrzeugs angelenkt ist.

11. Kraftfahrzeug nach einem der Ansprüche 1 bis 10, dadurch gekennzeichnet, daß der Ausleger (16) ein am Fahrzeugchassis (14) schwenkbar angelenktes Schwenkteil (15) und mindestens einen ausfahrbaren Einschub (17), im Bereich dessen freien Endes die Unterlenker (46) angelenkt sind oder der Träger (22) befestigt ist, enthält.

12. Kraftfahrzeug nach einem der Ansprüche 1 bis 11, dadurch gekennzeichnet, daß der Ausleger (16) zwei konzentrisch ineinander schiebbare Schüsse (15, 17) aufweist.

13. Kraftfahrzeug nach Anspruch 11 oder 12, dadurch gekennzeichnet, daß zwischen dem Schwenkteil (15) und einem ausfahrbaren Einschub (17) bzw. zwischen den Schüssen (15, 17) des Auslegers (16) jeweils wenigstens ein als Druckmittelkolben-Zylindereinheit ausgebildeter Ausschubzylinder (19) zum Aus- und Einfahren des Einschubs (17) bzw. der Schüsse (15, 17) vorgesehen ist.

14. Kraftfahrzeug nach einem der Ansprüche 1 bis 13, dadurch gekennzeichnet, daß zwischen dem Fahrzeugchassis (14) und dem Ausleger (16), insbesondere dem Schwenkteil (15), wenigstens ein als Druckmittelkolben-Zylindereinheit ausgebildeter Schwenkzylinder (28) zum vertikalen Schwenken des Auslegers (16) vorgesehen ist.

15. Kraftfahrzeug nach einem der Ansprüche 1 bis 14, dadurch gekennzeichnet, daß ein an den Dreipunkt-Geräteanbau befestigbarer Adapter vorgesehen ist, der der Aufnahme von speziellen Geräten dient.

16. Kraftfahrzeug nach einem der Ansprüche 1 bis 15, dadurch gekennzeichnet, daß eine Niveausteuereinrichtung mit Schwenkzylinder (28), Schubarmzylinder (30), Oberlenkerzylinder (45) und/oder Kraftheberzylinder (52) zusammenwirkt, um unabhängig von der Schwenklage des Auslegers (16) eine gewünschte Ausrichtung der durch die Kopplungspunkte (49, 51) des Oberlenkers (44) und der Unterlenker (46) aufgespannten Ebene (56) relativ zum Boden aufrecht zu halten.
